(19) Europäisches Patentamt
European Patent Office
Office européen des brevets

(11) **EP 4 095 803 A1**

(12) **EUROPEAN PATENT APPLICATION**
published in accordance with Art. 153(4) EPC

(43) Date of publication:
**30.11.2022 Bulletin 2022/48**

(21) Application number: **21744269.8**

(22) Date of filing: **06.01.2021**

(51) International Patent Classification (IPC):
*G06T 7/80* (2017.01)      *G06T 7/60* (2017.01)
*G06T 9/00* (2006.01)      *H04N 19/44* (2014.01)

(52) Cooperative Patent Classification (CPC):
**G06T 7/60; G06T 7/80; G06T 9/00; H04N 19/44**

(86) International application number:
**PCT/CN2021/070399**

(87) International publication number:
**WO 2021/147670 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.01.2020 CN 202010076152**

(71) Applicant: **Huawei Technologies Co., Ltd.
Shenzhen, Guangdong 518129 (CN)**

(72) Inventors:
• **XU, Ke**
  **Shenzhen, Guangdong 518129 (CN)**
• **CHEN, Tongqing**
  **Shenzhen, Guangdong 518129 (CN)**
• **CHEN, Yilun**
  **Shenzhen, Guangdong 518129 (CN)**

(74) Representative: **Maiwald GmbH
Elisenhof
Elisenstraße 3
80335 München (DE)**

(54) **IMAGE PROCESSING METHOD AND APPARATUS**

(57)    This application provides an image processing method (400) and apparatus. The method (400) may include: generating a calibration image (401); collecting the calibration image, where the calibration image includes a position mark that is used to indicate a position of a positioning point of the calibration image (410); and decoding the calibration image based on the calibration image and the position mark (420). The position mark is carried in the calibration image, so that when the calibration image is decoded, the position of the positioning point can be determined simply, quickly, and accurately based on the calibration image. In this way, an accurate decoding result can be obtained, and decoding duration can be reduced.

FIG. 4

**Description**

This application claims priority to Chinese Patent Application No. 202010076152.5, filed with the China National Intellectual Property Administration on January 23, 2020 and entitled "IMAGE PROCESSING METHOD AND APPARATUS", which is incorporated herein by reference in its entirety.

**TECHNICAL FIELD**

This application relates to the field of image technologies, and in particular, to an image processing method and apparatus.

**BACKGROUND**

Camera calibration is a basis of machine vision, and quality of a calibration result directly determines system precision of machine vision.

A self-driving vehicle is used as an example. The self-driving vehicle relies on a plurality of sensors to sense an ambient environment. A video camera on the self-driving vehicle plays an important role. The video camera can provide necessary information for safe driving of the vehicle by analyzing an image. Intrinsic parameters of the video camera are determined in a manufacture process. The intrinsic parameters are accurate, and there is little individual difference. Extrinsic parameters of the video camera are greatly affected by installation. Therefore, the extrinsic parameters are calibrated usually after the video camera is installed on the vehicle.

Speed reliability in extrinsic video camera parameter calibration affects production efficiency of vehicles to some extent. Therefore, it is very important to quickly and accurately calibrate the extrinsic parameters of the video camera.

**SUMMARY**

This application provides an image processing method and apparatus, to simply, quickly, and accurately determine a position of a positioning point of a calibration image. In this way, a decoding rate can be improved.

According to a first aspect, an image processing method is provided. The method may include: collecting a calibration image, where the calibration image includes a position mark that indicates a positioning point of the calibration image; and decoding the calibration image based on the calibration image and the position mark.

For example, the calibration image carries position information, so that a decoder side determines the positioning point of the calibration image.

Based on the foregoing technical solution, the position mark is carried in the calibration image, that is, the decoder side is notified of the position mark that is of the positioning point and that is carried in the calibration image. In this way, the decoder side can simply, quickly, and accurately determine a position of the positioning point based on the calibration image. The position of the positioning point of the calibration image is determined based on the position mark, so that the decoder side can quickly identify the position of the positioning point. As a result, a decoding rate is increased, and decoding duration is reduced.

With reference to the first aspect, in some implementations of the first aspect, the position mark is marked by using different colors.

According to the foregoing technical solution, the position of the positioning point of the calibration image is marked by using different colors. In this way, the position of the positioning point can be identified conveniently and quickly.

With reference to the first aspect, in some implementations of the first aspect, the position mark is marked by a corner point of a black-and-white checkerboard.

In other words, the position mark may be formed by the black-and-white checkerboard, and the corner point of the checkerboard may be used to represent the position of the positioning point of the calibration image.

With reference to the first aspect, in some implementations of the first aspect, the decoding the calibration image based on the calibration image and the position mark includes: determining the positioning point of the calibration image based on the position mark; and decoding the calibration image based on the positioning point of the calibration image and the calibration image.

With reference to the first aspect, in some implementations of the first aspect, the decoding the calibration image based on the calibration image and the position mark includes: obtaining, based on the calibration image and the position mark, a positioning point through rough extraction; and performing sub-pixelization processing on the positioning point obtained through rough extraction, to determine the positioning point of the calibration image.

According to the foregoing technical solution, to determine the positioning point of the calibration image, rough extraction and precise extraction may be performed. That is, an approximate positioning point may be extracted first, and then the positioning point is precisely searched for. In this way, positioning precision can be improved. For example, the positioning precision can reach a sub-pixel level.

With reference to the first aspect, in some implementations of the first aspect, the decoding the calibration image based on the calibration image and the position mark includes: obtaining, based on the calibration image and the position mark, a binary code corresponding to the calibration image; and determining a code direction of the calibration image based on a position of a preset sequence in the binary code.

According to the foregoing technical solution, the code direction of the calibration image may be determined according to a preset rule, for example, a relationship between the position of the preset sequence and the code direction. In other words, a start position of a calibration image code may be determined according to the preset rule. In this way, a dedicated direction mark is not required to mark the start position, and when decoding is performed, there is no need to find the direction mark before decoding. As a result, algorithm complexity and decoding duration can be reduced.

With reference to the first aspect, in some implementations of the first aspect, the preset sequence is located on a most significant bit or a least significant bit of the code.

According to the foregoing technical solution, the preset sequence is located on the most significant bit or the least significant bit of the code. In this way, the decoder side may determine that the position of the preset sequence is the most significant bit or the least significant bit of the code.

For example, a code string may include only one preset sequence. In other words, the code string may include a unique preset sequence. In this way, a code direction can be quickly determined based on a correspondence between the unique preset sequence and the position (for example, a least significant bit of the code or a most significant bit of the code).

With reference to the first aspect, in some implementations of the first aspect, the decoding the calibration image based on the calibration image and the position mark includes: decoding the calibration image based on the calibration image and the position mark under M threshold conditions, to obtain M decoding results, where M is an integer greater than or equal to 2; and determining a decoding result that appears most frequently in the M decoding results as a decoding result of the calibration image.

According to the foregoing technical solutions, to identify codes as much as possible in various background environments, a plurality of constraint conditions (that is, threshold conditions) are set. A stricter constraint condition indicates higher decoding reliability. For example, a plurality of scales are used for binarization processing, and identification results obtained at different scales may be clustered based on an accurate position mark. An accurate decoding result and a pixel position may be obtained through voting. In this way, a probability of incorrect detection can be reduced, and a detection probability can be improved.

With reference to the first aspect, in some implementations of the first aspect, a contour of the calibration image is circular.

For example, code points may be arranged on an inner ring and an outer ring. In such an arrangement manner, space can be effectively used, and a distance between adjacent code points can be maximized.

According to a second aspect, an image processing method is provided. The method may include: collecting a calibration image; obtaining a binary code corresponding to the calibration image; determining a code direction of the calibration image based on a position of a preset sequence in the binary code; and decoding the calibration image based on the code direction of the calibration image.

According to the foregoing technical solution, the code direction of the calibration image may be determined according to a preset rule, for example, a relationship between the position of the preset sequence and the code direction. In other words, a start position of a calibration image code may be determined according to the preset rule. In this way, a dedicated direction mark is not required to mark the start position, and when decoding is processed, there is no need to find the direction mark before decoding. As a result, algorithm complexity and decoding duration can be reduced.

With reference to the second aspect, in some implementations of the second aspect, the preset sequence is located on a most significant bit or a least significant bit of the code.

According to the foregoing technical solution, the preset sequence is located on the most significant bit or the least significant bit of the code. In this way, a decoder side may determine that the position of the preset sequence is the most significant bit or the least significant bit of the code.

For example, a code string may include only one preset sequence. In other words, the code string may include a unique preset sequence. In this way, a code direction can be quickly determined based on a correspondence between the unique preset sequence and the position (for example, a least significant bit of a code or a most significant bit of the code).

According to a third aspect, an image processing method is provided. The method may include: obtaining a code value; and generating a calibration image based on the code value, where the calibration image includes a position mark that is used to indicate a position of a positioning point of the calibration image.

According to the foregoing technical solution, when the calibration image or a code pattern is generated, the position mark may be carried in the calibration image, that is, a decoder side is notified of position information that is of the positioning point and that is carried in the calibration image. In this way, the decoder side can simply, quickly, and accurately determine the position of the positioning point based on the calibration image. In this way, an accurate decoding result can be obtained, and decoding duration can be reduced.

With reference to the third aspect, in some implementations of the third aspect, the position mark is marked by using different colors.

With reference to the third aspect, in some implementations of the third aspect, the position mark is marked by a positioning point of a black-and-white checkerboard.

With reference to the third aspect, in some implementations of the third aspect, the generating a calibration image based on the code value includes: generating the calibration image based on a binary code corresponding to the code value, where a position of a preset sequence in the binary code is used to determine a code direction of the calibration image.

With reference to the third aspect, in some implementations of the third aspect, the preset sequence is located on a most significant bit or a least significant bit of a code.

With reference to the third aspect, in some implementations of the third aspect, a contour of the calibration image is circular.

With reference to the third aspect, in some implementations of the third aspect, the calibration image includes N code points, where N is an integer greater than or equal to 1; and the generating a calibration image includes: arranging the N code points on an inner ring and an outer ring, to generate the calibration image.

According to a fourth aspect, an image processing method is provided. The method may include: obtaining a code value; and generating a calibration image based on a binary code corresponding to the code value, where a position of a preset sequence in the binary code is used to determine a code direction of the calibration image.

According to the foregoing technical solution, the code direction of the calibration image may be determined according to a preset rule, for example, a relationship between the position of the preset sequence and the code direction. In other words, a start position of a calibration image code may be determined according to the preset rule. In this way, a dedicated direction mark is not required to mark the start position, and when decoding is performed, there is no need to find the direction mark before decoding. As a result, algorithm complexity and decoding duration can be reduced.

With reference to the fourth aspect, in some implementations of the fourth aspect, the preset sequence is located on a most significant bit or a least significant bit of the code.

According to a fifth aspect, an image processing apparatus is provided, where the apparatus is configured to implement the methods provided in the first aspect to the fourth aspect. Specifically, the apparatus may include a module configured to implement the methods according to the first aspect to the fourth aspect.

According to a sixth aspect, an image processing apparatus is provided. The apparatus includes a memory and a processor. The memory is configured to store instructions, and the processor is configured to execute the instructions stored in the memory, so that the apparatus is enabled to implement the methods provided in the first aspect to the fourth aspect.

According to a seventh aspect, a chip is provided. The chip includes a processing module and a communications interface. The processing module is configured to control the communications interface to perform external communication, and the processing module is further configured to implement the methods provided in the first aspect to the fourth aspect.

According to an eighth aspect, a computer-readable storage medium is provided. The computer-readable storage medium stores a computer program; and when the computer program is executed by an apparatus, the apparatus is enabled to implement the methods provided in the first aspect to the fourth aspect, and any one of the possible implementations of the first aspect to the fourth aspect.

According to a ninth aspect, a computer program product including instructions is provided. When the instructions are executed by a computer, an apparatus is enabled to implement the methods provided in the first aspect to the fourth aspect.

For example, the computer program product may run a computer program on an in-vehicle computing platform for self-driving.

Based on this application, a calibration image carrying a position mark is provided. To be specific, a decoder side is notified of position information that is of a positioning point and that is carried in the calibration image. In this way, the decoder side can simply, quickly, and accurately determine a position of the positioning point based on the calibration image. In this way, an accurate decoding result can be obtained, and decoding duration can be reduced.

## BRIEF DESCRIPTION OF DRAWINGS

FIG. 1 is a schematic diagram of an application scenario to which an embodiment of this application is applied;

FIG. 2 is a schematic diagram of another application scenario to which an embodiment of this application is applied;
FIG. 3 is a schematic diagram of still another application scenario to which an embodiment of this application is applied;
FIG. 4 is a schematic block diagram of an image processing method according to an embodiment of this application;
FIG. 5 to FIG. 7 are schematic diagrams of position marks to which an embodiment of this application is applied;
FIG. 8 is a schematic diagram of a code pattern to which an embodiment of this application is applied;
FIG. 9 is a schematic diagram of circular shift to which an embodiment of this application is applied;
FIG. 10 is a schematic diagram of a decoding process to which an embodiment of this application is applied;
FIG. 11 is a schematic flowchart of a decoding process to which an embodiment of this application is applied;
FIG. 12 is a schematic diagram of another decoding process to which an embodiment of this application is applied;
FIG. 13 is a schematic flowchart of still another decoding process to which an embodiment of this application is applied;
FIG. 14 is a schematic flowchart of extrinsic camera parameter calibration to which an embodiment of this application is applied;
FIG. 15 is a schematic block diagram of an image processing apparatus according to an embodiment of this application; and
FIG. 16 is a schematic block diagram of another image processing apparatus according to an embodiment of this application.

## DESCRIPTION OF EMBODIMENTS

The following describes technical solutions in this application with reference to the accompanying drawings.

The technical solutions in embodiments of this application can be applied to various communications systems, for example, communication in an Interne of Vehicles system, device to device (device to device, D2D) communication, machine to machine (machine to machine, M2M) communication, machine type communication (machine type communication, MTC), a 5th generation (5th generation, 5G) system, or new radio (new radio, NR). Communication modes in the Internet of vehicles system are collectively referred to as V2X (where X represents everything). For example, V2X communication includes vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, or vehicle-to-network (vehicle to network, V2N) communication.

For ease of understanding of embodiments of this application, the following first briefly describes several terms in this application.

1. Sensor calibration: Each type of load cell has a three-dimensional rectangular coordinate system. When load cells are installed in a self-driving vehicle, coordinate origins and directions of three coordinate axes of the cells may be inconsistent. Extrinsic parameter calibration mainly includes determining three translation parameters and three rotation angle parameters between spatial rectangular coordinate systems.

2. Intrinsic camera parameter: Intrinsic camera parameters include a parameter related to a camera feature. An intrinsic camera parameter may be determined by installation positions of an optical lens and a photoelectric sensor in a module. The intrinsic camera parameter may include but is not limited to a focal length, a pixel size, an optical distortion, a white balance parameter, resolution and contrast, a flare, a dark angle, and the like.

3. Extrinsic camera parameter: Each type of load cell has a three-dimensional rectangular coordinate system. A main purpose of extrinsic camera parameter calibration is to obtain a pose relationship between a coordinate system of a camera and a coordinate system of a vehicle body, which is usually composed of three rotation angles and three translation components, or may be represented by a rotation matrix.

It should be understood that, in the following, a video camera and a camera are often alternately used, and have a same meaning.

It should be further understood that any device that can collect an image may be used in embodiments of this application.

4. PnP algorithm: A PnP (perspective-n-point, PnP) problem is calculating a camera pose or an object pose when pairs of n spatial 3D points and corresponding 2D points in an image are given. The camera pose and object pose are corresponding. Generally, the least square solution exists when n is greater than 3. In actual calibration, a plurality of points are used to determine an optimal solution by using an iteration method.

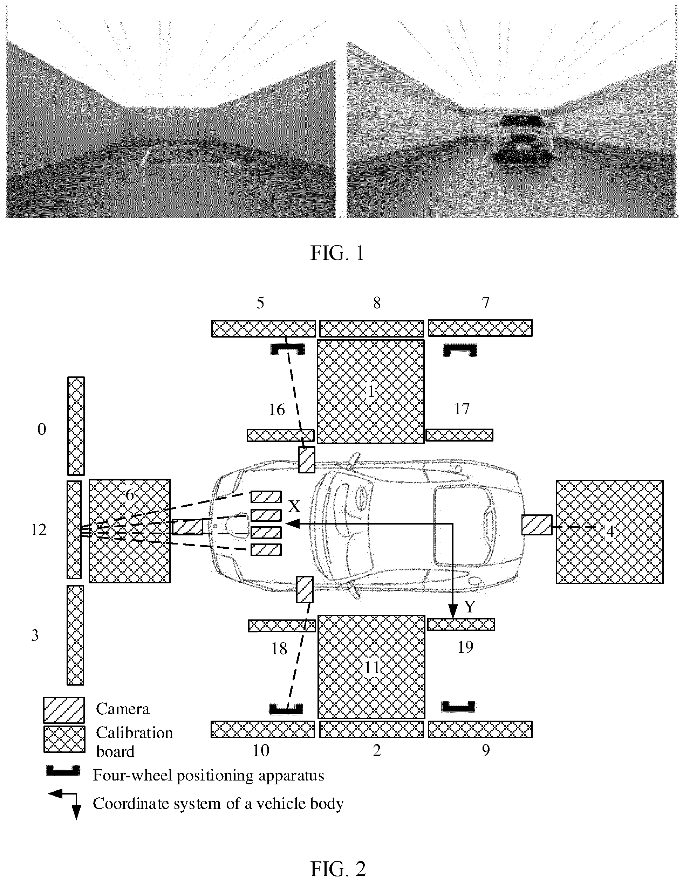

To facilitate understanding of embodiments of this application, the following describes in detail, with reference to FIG. 1 to FIG. 3, application scenarios applicable to embodiments of this application.

Embodiments of this application are applied to a scenario of extrinsic parameter calibration of a self-driving vehicle.

FIG. 1 is a schematic diagram of an application scenario to which an embodiment of this application is applied.

FIG. 1 is a schematic diagram of a calibration workshop of a self-driving vehicle. A wheel positioning apparatus can determine a spatial position of the vehicle. Processing such as image collection and extrinsic parameter result calculation can be implemented with an in-vehicle computing platform.

FIG. 2 is a schematic diagram of another application scenario to which an embodiment of this application is applied.

As shown in FIG. 2, usually, a plurality of video cameras are provided for a self-driving vehicle. Automatic, fast, and accurate extrinsic camera parameter calibration is an important part of intelligent vehicle manufacture. Currently, a solution applied by many vehicle manufacturers is that a station is added at an end of a production line and a calibration image is placed at a specified position for calibration, which is shown in Figure 2.

It can be learned from FIG. 2 that a four-wheel positioning apparatus can determine a spatial position of the vehicle. For example, a world coordinate system may be constructed by using a total station, and the four-wheel positioning apparatus may determine a matrix of the vehicle relative to the world coordinate system based on a wheel position, so as to determine the spatial position of the vehicle. An in-vehicle computing platform can drive a to-be-calibrated camera to collect and decode a calibration image on a calibration board, and calculate extrinsic parameters of all cameras.

Because it needs to be ensured that spatial points and pixels in images are in one-to-one correspondences based on unique content, these images are unique. In other words, when extrinsic parameter calibration is performed, positions of the calibration images are usually fixed and different from each other. In addition, the calibration images are rotationally invariant, so that the calibration image can be accurately identified when the camera is in various postures.

An identification speed and identification precision of the calibration image have great impact on calibration efficiency and calibration accuracy of a calibration result.

This application provides a manner in which a calibration pattern carries information indicating a position of an image corner point, for example, a position mark, so that the calibration image can be quickly and accurately identified.

It should be understood that in the following, a "calibration pattern", a "calibration image", a "code pattern", and a "code image" are often used alternately. A person skilled in the art should understand meanings of the "calibration pattern", the "calibration image", the "code pattern", and the "code image", which are all used to represent an image used for calibration.

Embodiments of this application may be further applied to joint calibration of a camera and another sensor such as a radar or a millimeter-wave radar.

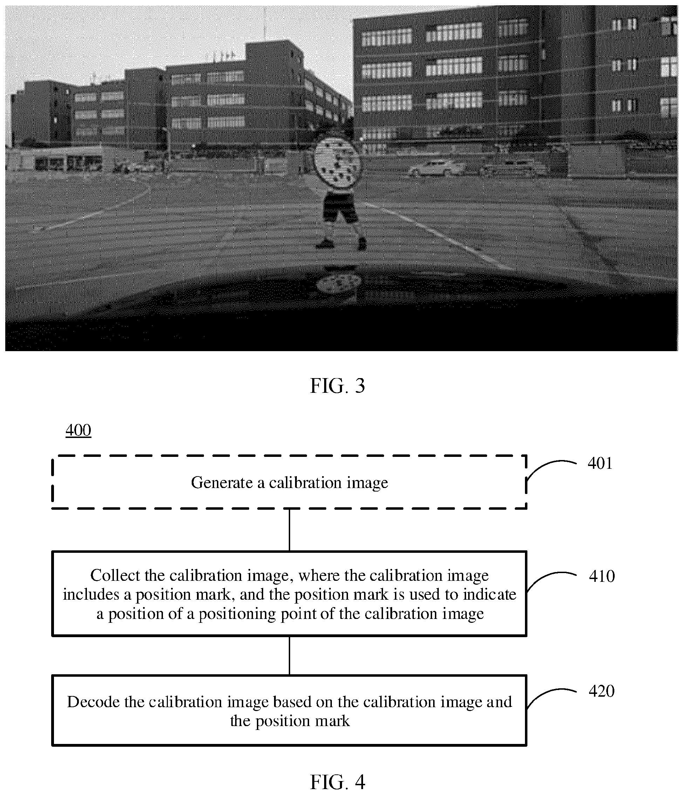

FIG. 3 is a schematic diagram of another application scenario to which an embodiment of this application is applied.

The following uses a joint calibration process of a radar and a camera as an example for description. By using a vision sensor and a laser sensor, a type of an obstacle around a self-driving vehicle and a distance from the vehicle may be determined. FIG. 3 shows a result of projecting a laser point cloud into an image after calibration.

It should be understood that FIG. 1 to FIG. 3 are merely examples for description, and this application is not limited thereto. For example, embodiments of this application can be further applied to any scenario in which image content needs to be identified.

The following describes in detail embodiments provided in this application with reference to accompanying drawings.

FIG. 4 is a schematic block diagram of an image processing method 400 according to an embodiment of this application. The method 400 may include the following steps.

410. Collect a calibration image, where the calibration image includes a position mark, and the position mark is used to indicate a position of a positioning point of the calibration image.

420. Decode the calibration image based on the calibration image and the position mark.

It should be understood that the calibration image is merely a name, and does not limit the protection scope of embodiments of this application. For consistency, the calibration image is used in the following description. It should be understood that all calibration images in the following description may be replaced with images, or all calibration images in the following description may be replaced with code images, or all calibration images in the following description may be replaced with calibration patterns, or all calibration images in the following description may be replaced with code patterns.

For example, in Step 410, collecting the calibration image may be understood as collecting, by a decoder side, a calibration image collected by a video camera or camera.

The following describes in detail possible implementations of decoding the calibration image.

Optionally, the method 400 may further include Step 401.

401. Generate a calibration image.

In other words, an encoder side may generate the calibration image, and the calibration image generated by the encoder side includes a position mark indicating a positioning point of the calibration image. The positioning point, for example, may also be referred to as a corner point or a position. This is not limited herein. In the following description, the positioning point is used for description.

Based on this embodiment of this application, a calibration image carrying a position mark is provided. To be specific, the decoder side is notified of position information that is of the positioning point and that is carried in the calibration image. In this way, the decoder side can simply, quickly, and accurately determine a position of the positioning point based on the calibration image. In this way, an accurate decoding result can be obtained, and decoding duration can be reduced.

The following first describes the position information of the positioning point.

In this embodiment of this application, the position information is used to indicate information about the position of the positioning point in the calibration image. Because the position information is carried in the calibration image, the decoder side can quickly determine the position of the positioning point of the calibration image based on the position information carried in the calibration image.

Optionally, the position information may be indicated by the position mark in the calibration image. The position of the positioning point of the calibration image is determined based on the position mark, so that the decoder side can quickly identify the position of the positioning point. As a result, a decoding rate is increased, and decoding duration is reduced. It should be understood that using a position mark is merely a possible implementation, and any manner in which position information of a positioning point can be calibrated in a calibration image falls within the protection scope of this embodiment of this application.

It should be understood that the position mark may be implemented in a plurality of forms, and a position mark of any form that can mark the position of the positioning point of the calibration image can be applied to this embodiment of this application. A specific form of the position mark is not limited in this embodiment of this application. Any method that can be applied to mark the position of the positioning point of the calibration image falls within the protection scope of this embodiment of this application.

The following describes two possible methods by using examples.

Example 1: The position mark may be marked by using different colors.

For example, the position mark is marked by a corner point of a black-and-white checkerboard.

In other words, the position mark may be formed by a black-and-white checkerboard, and a corner point of the checkerboard represents the position of the positioning point of the calibration image.

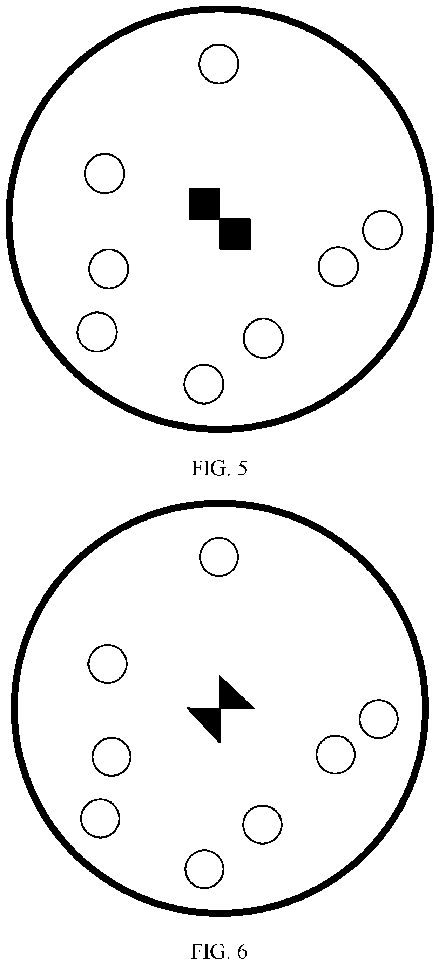

FIG. 5 and FIG. 6 show two possible forms of the calibration image as examples.

As shown in FIG. 5, the position mark may be determined based on a contact point of two black squares in the center of the calibration image.

In FIG. 5, the two black squares in the center may be used to represent the positioning point of the calibration image, and the contact point of the two black squares represents the positioning point of the calibration image. It can be learned that a layout of the two black squares and a surrounding white background is similar to a black-and-white checkerboard. The corner point of the black-and-white checkerboard, that is, the contact point of the two black squares in FIG. 5, may be used to represent the positioning point of the calibration image.

In FIG. 5, a dot may represent a code point. For example, code points may be arranged on an inner ring and an outer ring. In such an arrangement manner, space can be effectively used, and a distance between adjacent code points can be maximized. Take a 16-bit binary code as an example. Code points are arranged on an inner ring and an outer ring, and the code points may appear at eight positions of the inner ring and the outer ring. Therefore, an angular resolution may reach 360/16=18.75 degrees.

It should be understood that, in this embodiment of this application, the code points may be arranged on the inner ring and the outer ring, or the code points may be evenly arranged on one ring. This is not limited.

It should be further understood that positions of dots (namely, the code points) in FIG. 5 do not constitute any limitation on the protection scope of this embodiment of this application. In practice, a position of a code point may be determined based on an actual situation.

In FIG. 5, a contour of the calibration image may be a circle. For example, the contact point of the two black squares in the center may overlap with a center of a contour circle.

It can be learned that the calibration image is composed of the code points and the position mark.

It should be understood that FIG. 5 is merely an example for description, and does not constitute any limitation on the protection scope of this embodiment of this application. For example, the contour or the code points of the calibration image may alternatively be in another shape.

For ease of description, an example in which the contour of the calibration image is a circle and the code points are dots is used in the following description.

For another example, as shown in FIG. 6, the position mark may be determined based on a contact point of two black triangles in the center of the calibration image.

In FIG. 6, the two black triangles in the center may be used to represent the positioning point of the calibration image, and the contact point of the two black triangles represents the positioning point of the calibration image. It can be learned that a layout of the two black triangles and a surrounding white background is similar to a black-and-white checkerboard. A corner point of the black-and-white checkerboard, that is, the contact point of the two black triangles in FIG. 6, may be used to represent the positioning point of the calibration image.

In FIG. 6, a dot may represent a code point. For example, code points may be arranged on an inner ring and an outer ring. It should be understood that positions of dots (namely, the code points) in FIG. 6 do not constitute any limitation on the protection scope of this embodiment of this application. In practice, a position of a code point may be determined based on an actual situation.

In FIG. 6, the contour of the calibration image may be a circle. For example, the contact point of the two black triangles in the center may overlap with a center of a contour circle.

It can be learned that the calibration image is composed of the code points and the position mark.

It should be understood that FIG. 6 is merely an example for description, and does not constitute any limitation on the protection scope of this embodiment of this application. For example, the contour or the code points of the calibration image may alternatively be in another shape.

The foregoing describes two possible forms of the calibration image as examples with reference to FIG. 5 and FIG. 6. It should be understood that the two forms are merely examples for description, and do not constitute any limitation on the protection scope of embodiments of this application. Any manner in which a position of a positioning point of a calibration image is marked by using different colors falls within the protection scope of this embodiment of this application.

In the foregoing Example 1, the position of the positioning point of the calibration image is marked by using different colors. In this way, the position of the positioning point can be identified conveniently and quickly.

Example 2: The position mark may be marked by a cross point.

For example, the position mark is marked by a cross point in the center of the calibration image.

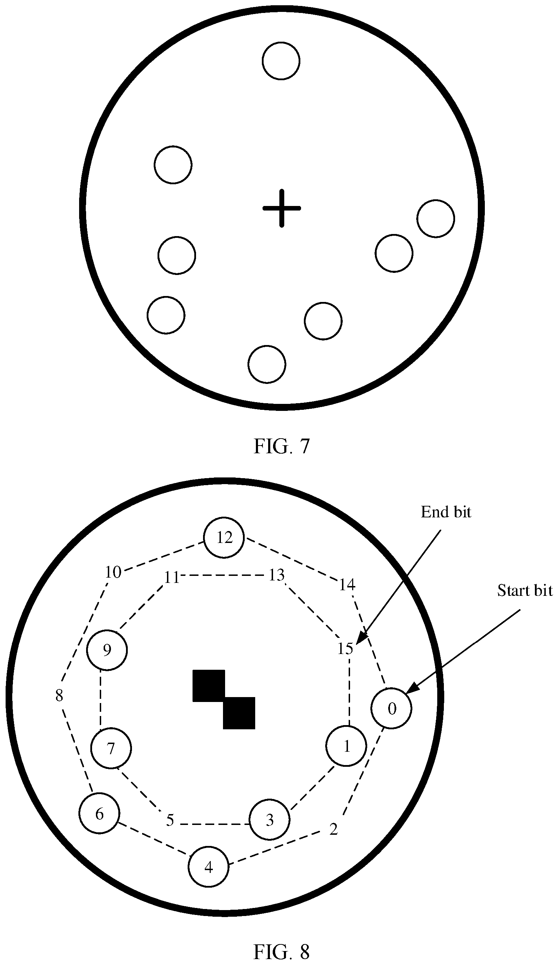

FIG 7 shows a possible form as an example.

As shown in FIG. 7, the position mark may be determined based on the cross point in the center of the calibration image.

In FIG. 7, a dot may represent a code point. For example, code points may be arranged on an inner ring and an outer ring. It should be understood that positions of dots (namely, the code points) in FIG. 7 do not constitute any limitation on the protection scope of this embodiment of this application. In practice, a position of a code point may be determined based on an actual situation.

In FIG. 7, a contour of the calibration image may be a circle. For example, the cross point in the center may overlap with a center of a contour circle.

It can be learned that the calibration image is composed of the code points and the position mark.

It should be understood that FIG. 7 is merely an example for description, and does not constitute any limitation on the protection scope of this embodiment of this application. For example, the contour or the code points of the calibration image may alternatively be in another shape. For another example, Example 2 may be used in combination with Example 1.

In the foregoing Example 2, the position of the positioning point of the calibration image is marked by the cross point. This is simple for the encoder side to achieve. In addition, for the decoder side, the position of the positioning point of the calibration image can be conveniently and quickly identified.

It should be understood that Example 1 and Example 2 are merely two examples for description, and a specific shape of the position mark is not limited. Any manner in which information that indicates a position of a positioning point is carried in a calibration image falls within the protection scope of embodiments of this application.

The following describes a manner of determining the positioning point of the calibration image based on the position mark.

Optionally, the positioning point of the calibration image may be determined through rough positioning point extraction and precise positioning point extraction.

To determine the positioning point of the calibration image, two steps, namely, rough extraction and precise extraction may be performed. That is, an approximate positioning point may be extracted first, and then the positioning point is precisely searched for. In this way, positioning precision can be improved. For example, the positioning precision can reach a sub-pixel level.

For example, sub-pixelization processing may be performed on a positioning point obtained through rough extraction, to determine a positioning point obtained through precise extraction.

In a possible implementation, a final precise corner point may be calculated by using a sub-pixel contact point extraction algorithm. In this way, final positioning precision can reach a sub-pixel level.

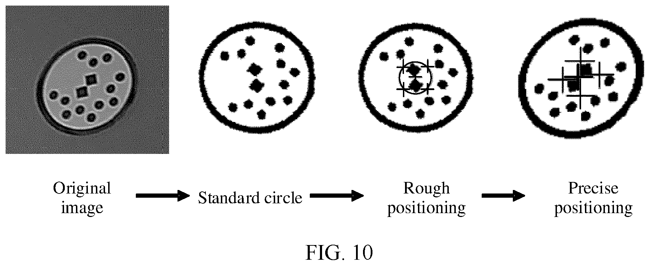

For example, by using an iterative method, an accurate sub-pixel corner point is obtained based on a characteristic that a pixel gradient of an edge point is perpendicular to a vector of a sub-pixel corner point connected to the edge point. A sub-pixel corner point result obtained through precise positioning processing is shown as precise positioning in FIG. 10.

The following describes rough positioning and precise positioning in detail with reference to the calibration image described in FIG. 5.

First, after collecting the calibration image, the decoder side may first perform rough positioning, for example, rough positioning shown in FIG. 10.

For example, after collecting the calibration image (for example, an original image shown in FIG. 10), the decoder side may first transform the original image into a standard circle. A specific transformation manner is not limited in this embodiment of this application.

Rough positioning point extraction, that is, rough positioning, can be implemented in the standard circle image. The positioning point is a contact point of two black squares. The contact point is designed to overlap with the center of the contour circle of the calibration image. It should be understood that the positioning point may not overlap with a center of the standard circle, which is determined by transformation from the original image to the standard circle. However, the positioning point usually does not significantly deviate from the center of the standard circle. A result obtained through rough positioning is shown as rough positioning in FIG. 10. An initial point (that is, a contact point of two black squares in the rough positioning in FIG. 10) and vertexes of a search window (that is, vertexes marked by four crosses in the rough positioning in FIG. 10) are all marked in the figure.

Then precise positioning may be performed on a positioning point obtained through rough positioning, for example, precise positioning shown in FIG. 10 may be performed.

For example, the vertexes of the search window and the rough positioning point may be transformed into coordinates in the original image through inverse affine transformation. When the initial point and a search range of the original image is given, a final precise corner point can be calculated by using a sub-pixel contact point extraction algorithm. For example, by using an iterative method, an accurate sub-pixel corner point is obtained based on a characteristic that a pixel gradient of an edge point is perpendicular to a vector of a sub-pixel corner point connected to the edge point. A sub-pixel corner point result obtained through precise positioning processing is shown as the precise positioning in FIG. 10.

The foregoing example describes a manner of performing rough positioning and precise positioning. It should be understood that this embodiment of this application is not limited thereto. For example, precise positioning processing may be performed by using another algorithm

A specific manner of performing rough positioning and precise positioning is described below with reference to a complete decoding process.

The foregoing example describes a position mark of a positioning point of a calibration image and a possible manner of determining the positioning point of the calibration image. The following describes a code direction of a calibration image.

It should be understood that the solution of determining the code direction of the calibration image described in embodiments of this application may be used independently, or may be used in combination with the foregoing solution of carrying position information (for example, the position mark) in the calibration image. This is not limited herein.

In this embodiment of this application, a code direction of a calibration image may be determined according to a preset rule. In other words, a start position of a calibration image code may be determined according to the preset rule. In this way, a dedicated direction mark is not required to mark the start position, and when decoding is performed, there is no need to find the direction mark before decoding. As a result, algorithm complexity and decoding duration can be reduced.

For example, a least significant bit of a code may be denoted as a start bit, and a most significant bit of the code may be denoted as an end bit. For example, when a pattern is generated, a start bit corresponds to a least significant bit of a code, and an end bit corresponds to a most significant bit of the code.

Optionally, a code direction may be determined based on a position of a preset sequence.

That is, the code direction may be determined according to an arrangement rule of numbers. To be specific, a position of the preset sequence may be specified in advance. Then a decoder side may determine the code direction based on the position of the preset sequence.

In a possible implementation, the preset sequence is located on the most significant bit or the least significant bit of the code. In this way, the decoder side may determine that the position of the preset sequence is the most significant bit or the least significant bit of the code.

The preset sequence represents a pre-specified sequence. A specific quantity of bits included in the preset sequence is not limited. For example, the preset sequence may be 0001, 1000, 1100, 11010, 11000, 10100, 11100,011, 100, 110, or the like.

The preset sequence may also be referred to as, for example, a particular subsequence. A name of the preset sequence does not constitute any limitation on the protection scope of this embodiment of this application.

For example, a code string may include only one preset sequence. In other words, the code string may include a unique preset sequence. In this way, a code direction can be quickly determined based on a correspondence between the unique preset sequence and the position (for example, a least significant bit of a code or a most significant bit of the code).

Description is provided by using an example in which encoding is performed by using a 16-bit binary code. Any positive integer can be converted into a 16-bit binary code. For example, a binary code corresponding to 4827 is 0001001011011011. It may be learned that "0001" appears only on most significant four bits of the code string. Therefore, the preset sequence may be specified as "0001". In other words, "0001" may be referred to as a preset sequence. In addition, this rule applies to 2,031 types of 16-bit binary numbers.

Table 1 lists quantities of all positive integers that are less than or equal to $2^{16}$ and that meet a condition that a corresponding preset sequence is included.

**Table 1**

| Preset sequence | Quantity |
|---|---|
| 0001, 1000, 1100 | 2031 |
| 0010, 1001,0100 | 1652 |
| 11010, 11000, 10100, 11100 | 1606 |
| 1010 | 1440 |
| 10001 | 1409 |
| 10010 | 1264 |
| 011, 100, 110 | 986 |

It can be learned from Table 1 that in this manner of determining a code direction based on a position of a preset sequence, in other words, determining the code direction according to an arrangement rule of numbers, on a premise of ensuring uniqueness (that is, the preset sequence appears only once in a code string), the decoder side can perform decoding quickly, algorithm complexity can be reduced, and a sufficient encoding capacity can be ensured, for example, a capacity of 16-bit encoding can reach 2031.

The following provides descriptions from perspectives of an encoder side and a decoder side.

The encoder side may complete encoding according to a preset sequence.

For example, when a pattern is generated, a start bit corresponds to a least significant bit of a code, and an end bit corresponds to a most significant bit of the code.

For example, a code corresponding to 4827 is 0001001011011011. Drawing starts from the start bit, and the least significant bit of the code is determined. If a number of the least significant bit is 1, a code point, for example, a code dot, may be drawn in a corresponding position. If the number of the least significant bit is 0, no code point is drawn. Code points on other bits are drawn in turn according to this rule. A result of encoding 4827 may be shown in FIG. 8.

It should be understood that dashed lines in FIG. 8 are marked for description, and may exist or may not exist in practice. This is not limited herein.

It should be further understood that "0" to "15" in FIG. 8 are marked to facilitate understanding, and may not be marked in practice. For example, "0" indicates the start bit "1" of the code corresponding to 4827, and "15" indicates the end bit "0" of the code corresponding to 4827.

It should be further understood that FIG. 8 is merely an example pattern, and does not constitute any limitation on the protection scope of this embodiment of this application.

For the decoder side, the code direction may be determined based on the preset sequence. For example, the preset sequence is located on the most significant bit of the code.

The example in which the encoder side performs encoding based on 4827 is still used.

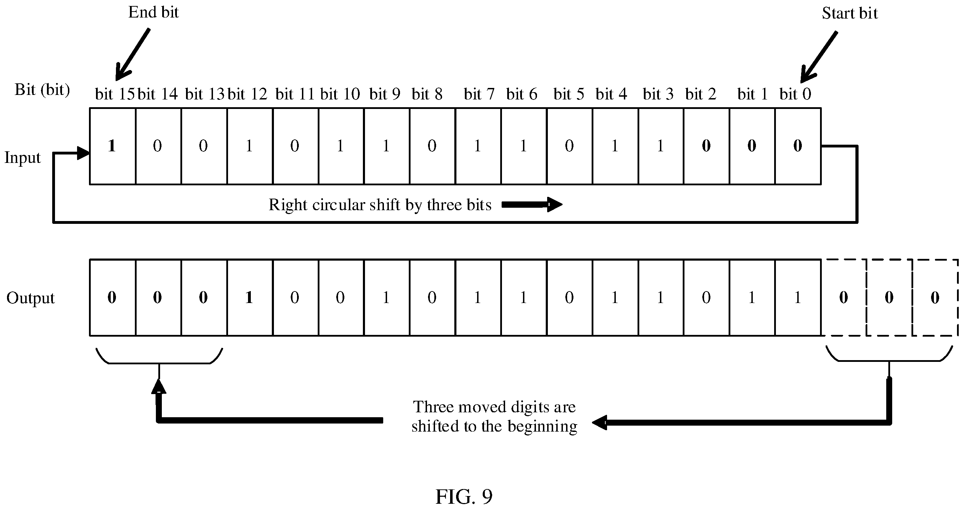

The code direction is determined based on the preset sequence "0001". It is assumed that a preset rule is that the preset sequence is located on most significant bits, it may be determined that "0001" is located on the most significant four bits. Then circular shift of digit may be performed until "0001" is located on the most significant four bits, to obtain a decoding result. FIG. 9 shows this process.

As shown in FIG. 9, after processing by the decoder side, a 16-bit binary code may be obtained. For example, a result 1001011011011000 of the decimal number 4827 (the binary number 0001001011011011) may be obtained. In this case, circular shift of digit may be performed. For example, least significant three bits "000" are moved to a start position, that is, most significant bits. In this way, "0001" is located on most significant four bits.

It should be understood that a specific processing manner of circular shift is not limited in this embodiment of this application, and any manner in which a code direction can be determined according to a preset rule falls within the protection scope of this embodiment of this application.

Based on the foregoing manner in which the code direction is determined according to the preset rule, a sufficient encoding capacity can be provided on the premise of ensuring uniqueness. In addition, a code can be identified through simple calculation in a decoding process, and a decoding speed is high.

The foregoing examples describe the position of the positioning point of the calibration image and determining of the code direction of the calibration image. The following describes a decoding process on the decoder side.

Optionally, decoding the calibration image based on the calibration image and the position information under M threshold conditions is performed, to obtain M decoding results, where M is an integer greater than or equal to 2.

In this embodiment of this application, to identify codes as much as possible in various background environments, binarization is performed based on a plurality of thresholds in a decoding process. Therefore, a code value and position information can be obtained under each threshold condition, for example, denoted as (ID, pos). ID represents a code result obtained through decoding under a threshold condition, and pos represents a position of a corresponding positioning point under the threshold condition.

For example, different scales may be used for binarization in image preprocessing, to adapt to different environment luminance and noise backgrounds. Most processes of decoding are processing a pattern obtained through binarization. Binarization is easily affected by luminance and background noise. Therefore, a finer scale can be used to prevent missing detection or incorrect detection of patterns in some excessively bright or dim scenarios.

A plurality of data pairs in a form of (ID, pos) may be output through preprocessing at different scales. After rough extraction and precise extraction are performed on the position information (that is, pos), reliability of a result is high. Therefore, it is appropriate to classify data with close positions into a same group. A most reliable result is output through voting in a code group. For example, when voting is performed, some mechanisms may be selected to improve reliability, for example, a mechanism of outputting a result having a majority vote, to avoid false detection.

In the decoding method provided in this embodiment of this application, a plurality of constraint conditions (that is, threshold conditions) are set. A stricter constraint condition indicates higher decoding reliability. The plurality of scales are used for binarization processing, and identification results obtained at different scales may be clustered based on accurate position information. An accurate decoding result and a pixel position may be obtained through voting. In this way, a probability of incorrect detection can be reduced, and a detection probability can be improved.

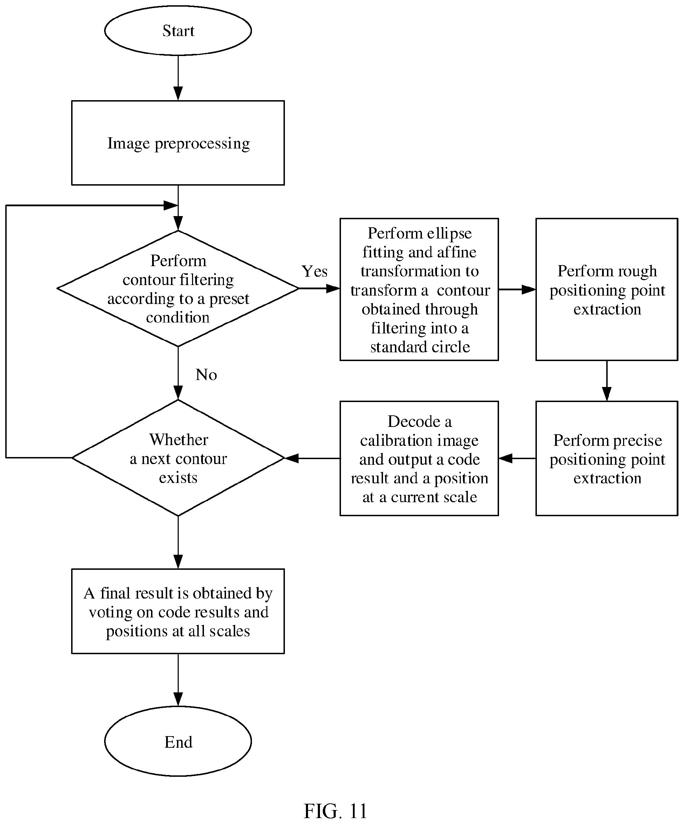

To facilitate understanding, the following describes a possible complete process of decoding on the decoder side with reference to FIG. 11.

It should be understood that FIG. 11 is merely an example for description, and this embodiment of this application is not limited thereto.

It is assumed that the image shown in FIG. 8 is used as a calibration image.

1. After the calibration image is collected, perform image preprocessing first.

Image preprocessing, for example, may include but is not limited to grayscale conversion, filtering, binarization processing based on a plurality of scale thresholds, and contour extraction.

It should be understood that the plurality of scales are used herein, to adapt to various luminance conditions and improve a detection probability.

2. Perform contour filtering according to a preset condition.

To be specific, a contour circle of the calibration image may be obtained through filtering according to the preset condition, so that an accurate result is obtained.

For example, in the preset condition, one or more of the following aspects may be taken into account.

Aspect 1: Contour area

For example, a contour with an excessively small area may be screened out or filtered out. If a contour area is excessively small, a quantity of pixels contained in the contour area is small. This may increase a probability of incorrect detection.

Aspect 2: Contour roundness

For example, the roundness may be represented by the following formula 1.

$$eliipse = \frac{L^2}{4\pi \cdot Area} \qquad \text{Formula 1}$$

L represents a circumference, Area represents an area, and eliipse represents roundness.

Generally, a more circular contour indicates smaller roundness; a less circular contour indicates larger roundness. Roundness of a standard circle is the smallest, which is 1. For example, a contour whose roundness is within a specific range may be selected. A contour whose roundness is beyond the range is considered seriously deformed by default. To ensure that an identification result is accurate, the contour whose roundness is beyond the range can be removed.

For example, when a projection angle is less than 70 degrees (70°), normal roundness may range from 1.0 to 1.5, and therefore the range may be set, for example, to [1.0, 1.5].

Aspect 3: Contour concaveness and a quantity of edges for polygonal approximation of a contour

Projection transformation does not change concaveness of an image, that is, a contour obtained through projection retains concaveness of an original image. For example, an elliptical contour whose quantity of edges for polygonal approximation is usually greater than 10 may be selected.

Aspect 4: Contour hierarchy

There is a clear contour hierarchy in the calibration image. For example, a contour of an outer circle has a plurality of child contours of a same level, and the child contours have no descendant contour.

It should be understood that, with reference to Aspect 1 to Aspect 4, the foregoing describes, as examples, several factors that may be considered when filtering is performed to obtain the contour circle of the calibration image. This embodiment of this application is not limited thereto.

It should be further understood that, as shown in FIG. 11, if the contour does not meet a preset condition, it may be checked whether a next contour exists. If a next contour exists, determining is performed on the next contour.

3. Perform ellipse fitting and affine transformation to transform a contour obtained through filtering into a standard circle.

In other words, ellipse fitting is performed on the selected contour, and the selected contour is transformed into a standard circle through affine transformation.

An ellipse equation may be presented as the following formula 2.

$$x^2 + Axy + y^2 + Cx + Dy + E = 0 \qquad \text{Formula 2}$$

It is assumed that the contour includes n points, where n is an integer greater than or equal to 6. Least square fitting is performed on the points, and an objective function may be represented as the following Formula 3.

$$F(A,B,C,D,E) = \sum_{i=1}^{n} f^2(x_i, y_i) \qquad \text{Formula 3}$$

According to the extreme value theorem, if F takes a minimum value, the following formula 4 is obtained.

$$\frac{\partial F}{\partial A} = \frac{\partial F}{\partial B} = \frac{\partial F}{\partial C} = \frac{\partial F}{\partial D} = \frac{\partial F}{\partial E} = 0 \qquad \text{Formula 4}$$

Then the following formula 5 is obtained.

$$\begin{bmatrix} \sum_{i=1}^{n} x_i^2 y_i^2 & \sum_{i=1}^{n} x_i y_i^3 & \sum_{i=1}^{n} x_i^2 y_i & \sum_{i=1}^{n} x_i y_i^2 & \sum_{i=1}^{n} x_i y_i \\ \sum_{i=1}^{n} x_i y_i^3 & \sum_{i=1}^{n} y_i^4 & \sum_{i=1}^{n} x_i y_i^2 & \sum_{i=1}^{n} y_i^3 & \sum_{i=1}^{n} y_i^2 \\ \sum_{i=1}^{n} x_i^2 y_i & \sum_{i=1}^{n} x_i y_i^2 & \sum_{i=1}^{n} x_i^2 & \sum_{i=1}^{n} x_i y_i & \sum_{i=1}^{n} x_i \\ \sum_{i=1}^{n} x_i y_i^2 & \sum_{i=1}^{n} y_i^3 & \sum_{i=1}^{n} x_i y_i & \sum_{i=1}^{n} y_i^2 & \sum_{i=1}^{n} y_i \\ \sum_{i=1}^{n} x_i y_i & \sum_{i=1}^{n} y_i^2 & \sum_{i=1}^{n} x_i & \sum_{i=1}^{n} y_i & n \end{bmatrix} \begin{bmatrix} A \\ B \\ C \\ D \\ E \end{bmatrix} = \begin{bmatrix} \sum_{i=1}^{n} x_i^3 y_i \\ \sum_{i=1}^{n} x_i^2 y_i^2 \\ \sum_{i=1}^{n} x_i^3 \\ \sum_{i=1}^{n} x_i^2 y_i \\ \sum_{i=1}^{n} x_i^2 \end{bmatrix} \qquad \text{Formula 5}$$

Ellipse parameters A, B, C, D, and E may be obtained by substituting coordinates of the contour into formula 5. Therefore, a major axis a, a minor axis b, central coordinates, and a tilt angle of an ellipse may be obtained.

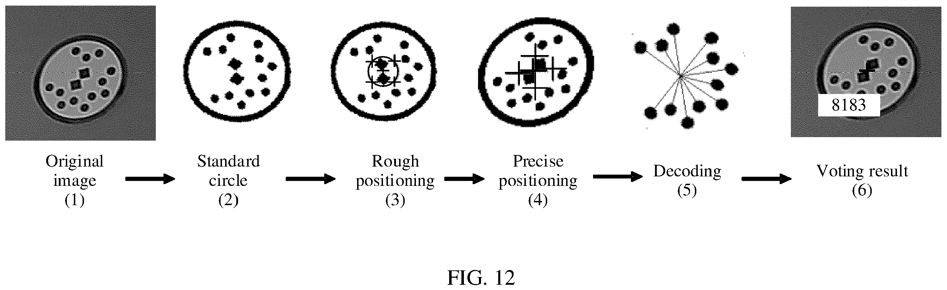

A bounding rectangle of the ellipse may be converted into a square through affine transformation, and correspondingly, the ellipse is converted into a standard circle. The standard circle is a standard circle shown in (2) in FIG. 12. An affine transformation formula may be, for example, formula 6.

$$\begin{pmatrix} x \\ y \end{pmatrix} = \begin{pmatrix} a_{11} & a_{12} & b_1 \\ a_{21} & a_{22} & b_2 \end{pmatrix} \begin{pmatrix} u \\ v \\ 1 \end{pmatrix}$$
Formula 6

In formula 6, u and v are coordinates before transformation, x and y are coordinates after transformation, and at least three pairs of points are provided. In this case, six transformation unknowns can be solved for by using six equations, and the six unknowns form an affine transformation matrix M, that is:

$$M = \begin{pmatrix} a_{11} & a_{12} & b_1 \\ a_{21} & a_{22} & b_2 \end{pmatrix}$$

For this example, u and v are vertex coordinates of the bounding rectangle of the ellipse and are solved for in the foregoing steps. The coordinates x and y are vertex coordinates of a bounding rectangle of the standard circle and can be solved for after a diameter d of the standard circle is specified, and the coordinates are (0,0), (d,0), (d,d), (0,d) when arranged clockwise.

It should be understood that the foregoing process is merely an example for ease of understanding, and any manner in which an elliptical contour is converted into a standard circle falls within the protection scope of this embodiment of this application.

4. Perform rough positioning point extraction.

For example, a center point of the contour circle and an edge length of a checkerboard may be determined in the standard circle, and coordinates in an original image may be obtained through inverse affine transformation.

A positioning point is a contact point of two black squares. The contact point is designed to overlap with the center of the circle obtained based on the calibration image. Rough positioning point extraction is implemented in a standard circle image.

The positioning point may not overlap with a center of the standard circle, which is due to an error of contour fitting and the nature of projection transformation. However, the positioning point usually does not significantly deviate from the center of the standard circle.

It is assumed that a center point $(x_c, y_c)$ of the circle is used as an initial value of the positioning point.

In design of the calibration image, a size ratio of the black square to the contour circle is fixed. Therefore, a size of the black square in the standard circle image can be obtained. The size ratio of the black square to the contour circle is denoted as ration. The size of the black square in the standard circle image may be calculated according to the following formula 7.

$$L = \frac{d}{2} \cdot ration$$
Formula 7

Then coordinates of four vertexes of a search window may be:

$$(x_c \pm \sqrt{2}L, y_c \pm \sqrt{2}L)$$

A result of rough positioning is shown in (3) in FIG. 12, and an initial point and vertexes of the search window are depicted in the figure.

It should be understood that the foregoing manner of rough positioning point extraction is merely an example for description. This embodiment of this application is not limited thereto.

5. Perform precise positioning point extraction.

For example, in the original image, a center point is used as a start point, and an oblique edge of the checkerboard is used as a window length to precisely search for checkerboard corner points.

Calculation of sub-pixel corner point needs to be performed in the original image. Therefore, the search window and a rough positioning point may be transformed into coordinates in the original image through inverse affine transformation.

When the initial point and a search range of the original image is given, a final precise corner point can be calculated by using a sub-pixel contact point extraction algorithm. For example, by using an iterative method, an accurate sub-pixel corner point is obtained based on a characteristic that a pixel gradient of an edge point is perpendicular to a vector of a sub-pixel corner point connected to the edge point. A sub-pixel corner point result obtained through precise positioning processing is shown in (4) in FIG. 12.

It should be understood that the foregoing manner of precise positioning point extraction is merely an example for description. This embodiment of this application is not limited thereto.

According to the foregoing Steps 1 to 5, an accurate positioning point can be determined, in other words, positioning precision may reach a sub-pixel level. In the following description, decoding of the calibration pattern may be performed based on a determined positioning point.

6. Decode the calibration image and output a code result and a position at a current scale.

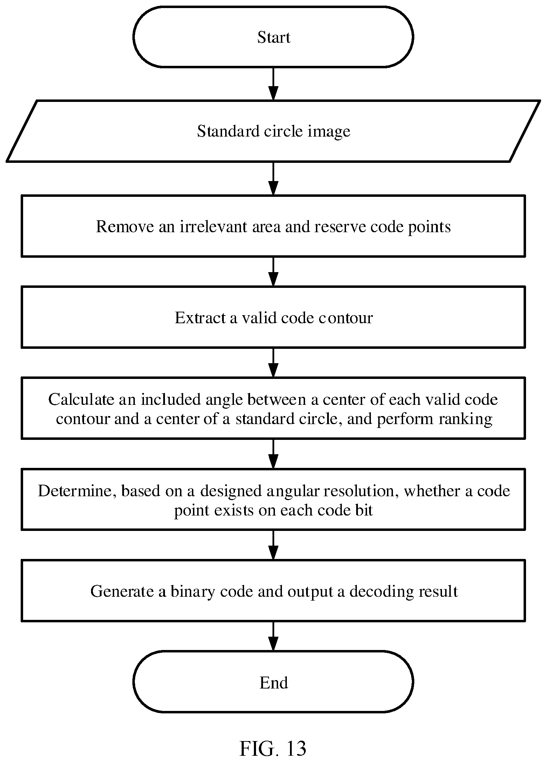

A position of the positioning point is calculated in the foregoing steps, and then code content may be decoded. Detailed description is provided with reference to FIG. 13.

(1) Standard circle image

By performing the foregoing steps, a standard circle image may be obtained, and the center of the standard circle is the positioning point. The calibration image is decoded in the standard circle image.

(2) Remove an irrelevant area and reserve code points.

For example, a size of the contour circle and a size of the position mark in the contour circle are given. Before decoding, the two irrelevant areas may be first removed to prevent interference.

(3) Extract a valid code contour.

For example, all contours in a valid area may be extracted, and a qualified code point contour is obtained through filtering according to a preset condition.

An example in which a contour area is taken into account in the preset condition is used. Because a code point diameter is designed to be in a fixed proportion to a contour circle diameter, a theoretical contour area of the code point can be obtained in the standard circle image. If an actual contour area is within a specific range, a contour with the actual contour area is used as a valid contour. For example, if the actual contour area is within a range of 0.5 to 1.5 times a theoretical area, a contour with the actual contour area may be used as a valid contour.

In addition, if there is an obviously abnormal contour, for example, a contour area is excessively large, this type of code may not be decoded.

The preset condition is described above, and details are not described herein again.

(4) Calculate an included angle between a center of each valid code contour and the center of the standard circle, and perform ranking.

To be specific, included angles between centers of valid code contours and the center of the standard circle relative to a horizontal line are calculated, and may be ranked in order.

For example, the included angles may be ranked in ascending order. For another example, the included angles may be ranked in descending order. This is not limited. It should be understood that a specific ranking manner is not limited. For example, the included angles may be ranked randomly.

(5) According to a designed angular resolution, determine whether a code point exists on each code bit.

For example, all angles may be traversed. If a current angle $\theta$ meets the following formula 8, an $m^{th}$ bit of a code 0000 0000 0000 0000 may be set to 1, where m is an integer greater than or equal to 1 and less than or equal to 16.

$$\left| \theta - \theta_{\min} - s \cdot m \right| < \frac{s}{2} \qquad \text{Formula 8}$$

In formula 8, s represents a minimum resolution. For example, s is 18.75° , that is, 360° / 16 = 18.75°. $\theta_{\min}$ represents a minimum angle in a rank.

A result obtained after all the angles are processed is shown in (5) in FIG. 12.

(6) Generate a binary code and output a decoding result.

After all the angles are processed, a 16-bit binary code can be obtained. For example, a result of a decimal number 4827 (binary number 0001001011011011) may be 1001011011011000.

According to a preset sequence "0001", circular shift of digit is performed until "0001" is located on most significant four bits, to obtain a decoding result. This process is shown in FIG. 9. For a specific processing process, refer to the foregoing description.

The foregoing describes the process of decoding the calibration image with reference to FIG. 13. It should be understood that the process is merely an example for description, and does not constitute any limitation on the protection scope of this embodiment of this application. Any solution in which a decoding result is obtained by decoding a calibration image, which is provided in this embodiment of this application, falls within the protection scope of the embodiment of this application.

It should be understood that, as shown in FIG. 11, after a code result and a position are determined, whether a next contour exists may be further determined. If a next contour exists, determining is performed on the next contour. If the next contour does not exist, Step 7 is performed.

7. A final result is obtained by voting on code results and positions at all scales.

To identify codes as much as possible in various background environments, a plurality of thresholds are used to perform binarization in the decoding process, and a code result and position information can be obtained under each threshold condition, which is denoted as, for example, (ID, pos). In this process, an error may occur in the decoding result under some threshold conditions, but a position obtained through rough extraction and precise extraction is accurate. After clustering according to the position information, voting is performed on identified content, and a final identification result is determined according to a principle of outputting a result having a majority vote. This process is shown in Table 2, and the final decoding result output according to the principle of outputting a result having a majority vote is 8183.

Table 2

| | | |
|---|---|---|
| ID: 8183 | pos: [660.883,291.253] | √ |
| ID: 6398 | pos: [661.661,292.367] | × |
| ID: 6398 | pos: [661.661,292.36] | × |
| ID: 4600 | pos: [661.601,292.772] | × |
| ID: 8183 | pos: [661.601,292.773] | × |
| ID: 8183 | pos: [660.995,291.376] | √ |
| ID: 8183 | pos: [660.99,291.359] | √ |
| ID: 8183 | pos: [661.194,290.92] | √ |
| ID: 8183 | pos: [661.192,290.913] | √ |
| ID: 8183 | pos: [660.979,290.822] | √ |
| ID: 8183 | pos: [660.799,291.267] | √ |
| ID: 8183 | pos: [660.641,291.312] | √ |
| ID: 8183 | pos: [660.486,291.029] | √ |
| ID: 8183 | pos: [660.195,290.603] | √ |
| ID: 8183 | pos: [660.348,290.35] | √ |
| ID: 8183 | pos: [660.546,290.51] | √ |
| ID: 7415 | pos: [660.545,290.508] | √ |

It should be understood that the foregoing describes a possible decoding process on the decoder side as an example with reference to FIG. 11 to FIG. 13. This embodiment of this application is not limited thereto. Any solution of performing calibration based on a calibration image, that is, carrying position information (for example, a position mark) in the calibration image, which is provided in this application, falls within the protection scope of embodiments of this application; or any solution of determining a code direction based on a position of a preset sequence, which is provided in this application, falls within the protection scope of embodiments of this application.

The following describes a specific scenario to which embodiments of this application are applied as an example.

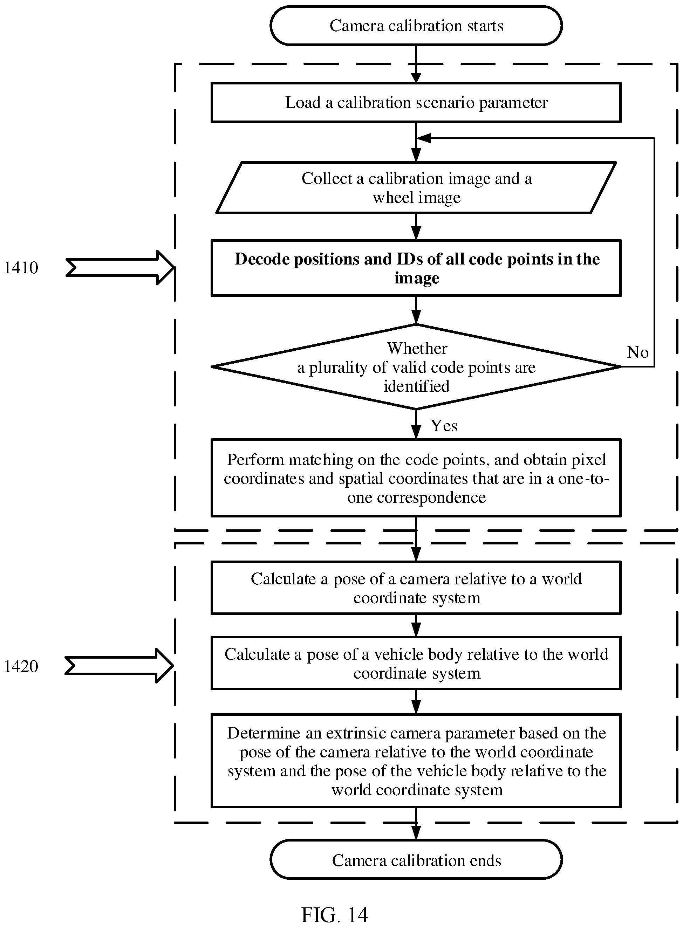

Optionally, embodiments of this application may be applied to extrinsic parameter calibration of a camera of a self-driving vehicle. A possible calibration process is shown in FIG. 14.

This embodiment of this application may be applied in Step 1410 of the calibration process.

In other words, in an extrinsic camera parameter calibration scenario of the self-driving vehicle, a spatial point and a pixel that are in a one-to-one correspondence can be obtained by using the encoding and decoding method provided in this embodiment of this application.

The following describes a possible calibration process of extrinsic camera parameter calibration of a self-driving vehicle.

The calibration process may include the following steps.

1410. Decode a collected calibration image, and obtain, based on a calibration scenario parameter, pixel coordinates and world coordinates that are in a one-to-one correspondence.

1420. Calculate an extrinsic camera parameter of each camera based on a result of Step 1410.

First, Step 1410 is described.

1. Load the calibration scenario parameter.

After camera calibration starts, the calibration scenario parameter is loaded first. For example, the parameter may include but is not limited to: spatial positions of all code points determined by using a detection apparatus, a position of a wheel positioning apparatus, and the like.

2. Collect a calibration image and a wheel image.

3. Decode positions and IDs of all code points in the image.

By performing image processing on the calibration image collected by the camera, code content of the calibration image and two-dimensional pixel coordinates (that is, a positioning point) in the image may be determined.

For specific description of determining the positions of the code points and the ID information, refer to the foregoing description. Details are not described herein again.

4. Determine whether a plurality of valid code points are identified.

If a plurality of valid code points are identified, matching is performed on the code points, and pixel coordinates and spatial coordinates that are in a one-to-one correspondence are obtained.

If the plurality of valid code points are not identified, Step 2 is performed again to collect the calibration image and the wheel image.

After the plurality of valid code points are identified, matching may be performed on the code points, and the pixel coordinates and the spatial coordinates that are in a one-to-one correspondence are obtained.

5. Perform matching on the code points, and obtain the pixel coordinates and the spatial coordinates that are in a one-to-one correspondence.

Because content of the code points is determined and unique, three-dimensional coordinates in a corresponding world coordinate system may be found in the calibration scenario parameter. All data used for calculating the extrinsic camera parameter may be obtained by performing Step 1410.

The following describes Step 1420.

6. Calculate a pose of the camera relative to the world coordinate system.

In a possible implementation, a rotation matrix of the camera relative to the constructed world coordinate system, for example, denoted as $W_{world2cam}$, may be calculated by using a PnP algorithm

7. Calculate a pose of a vehicle body relative to the world coordinate system.

In a possible implementation, a four-wheel positioning apparatus may determine a rotation matrix of the vehicle relative to the world coordinate system, for example, denoted as $W_{veh2world}$, based on a wheel position.

8. Determine the extrinsic camera parameter based on the pose of the camera relative to the world coordinate system and the pose of the vehicle body relative to the world coordinate system.

A purpose of extrinsic parameter calibration is to calculate a transition matrix of a camera coordinate system relative to a vehicle body coordinate system. The transition matrix can perform transformation by using world coordinates constructed by a total station.

In a possible implementation, a rotation matrix $W_{cam2veh}$ of the camera relative to the vehicle body may be represented as:

$$W_{cam2veh} = W_{veh2world}^{-1} \times W_{cam2world}^{-1}.$$

Camera calibration ends.

It should be understood that Step 6 and Step 7 can be performed in any sequence. In this embodiment of this application, whether the pose of the camera relative to the world coordinate system is first calculated or the pose of the vehicle body relative to the world coordinate system is first calculated is not limited.

It should be further understood that a specific process of camera calibration is not limited in this embodiment of this application, and any solution of determining code content in the image processing manner provided in this embodiment of this application falls within the protection scope of this embodiment of this application.

It should be further understood that the foregoing extrinsic camera parameter calibration scenario of the self-driving vehicle is merely an example for description. This embodiment of this application is not limited thereto. As shown in FIG. 3, this embodiment of this application may be further applied to joint calibration of a camera and another sensor. This embodiment of this application may be applied to another detection scenario.

FIG. 3 is used as an example. A result of joint calibration includes determining a rotation matrix of a laser coordinate system relative to a camera coordinate system. Therefore, a plurality of three-dimensional coordinates in the laser coordinate system and pixel coordinates matching the three-dimensional coordinates in an image are required. A calibration image carrying position information (for example, a position mark) provided in this embodiment of this application is used. It is assumed that a contour of the calibration image is a circle, and this feature is easy to be identified in a laser point cloud. For each frame of data, coordinates of a center of a circle of the image can be calculated. When there are a plurality of frames, joint calibration can be completed. FIG. 3 shows a result of projecting the laser point cloud into the image after calibration.

It should be understood that in some of the foregoing embodiments, the description is provided by using an example in which a 16-bit binary code is used for encoding. However, this should not constitute any limitation on this application. Any encoding manner falls within the protection scope of embodiments of this application.

It should be further understood that, in some of the foregoing embodiments, a position mark is carried in a calibration image to indicate a position of a positioning point in the calibration image, which does not constitute any limitation on this application. Any manner in which position information of a positioning point is indicated in a calibration image falls within the protection scope of embodiments of this application.

Embodiments described in this specification may be independent solutions, or may be combined based on internal logic. All these solutions fall within the protection scope of this application. For example, a solution of determining a code direction based on a location of a preset sequence and a solution of carrying location information (for example, a location mark) in a calibration image may be used separately or may be used in combination.

According to the foregoing technical solution, a calibration image carrying position information (for example, a position mark) is provided. To be specific, a decoder side is notified of position information that is of a positioning point and that is carried in the calibration image. In this way, the decoder side can simply, quickly, and accurately determine a position of the positioning point based on the calibration image. In this way, an accurate decoding result can be obtained, and decoding duration can be reduced.

In addition, in some embodiments, precise extraction is performed on the positioning point, so that positioning precision can be improved. For example, the positioning precision can reach a sub-pixel level.

In some embodiments, a code direction of a calibration image may be determined according to a preset rule. In other words, a start position of a calibration image code may be determined according to the preset rule. In this way, a dedicated direction mark is not required to mark the start position, and when decoding is performed, there is no need to find the direction mark before decoding. As a result, algorithm complexity and decoding duration can be reduced.

In addition, in some embodiments, a plurality of constraint conditions (that is, threshold conditions) are set. A stricter constraint condition indicates higher decoding reliability. A plurality of scales are used for binarization processing, and identification results obtained at different scales may be clustered based on accurate position information. An accurate decoding result and a pixel position may be obtained through voting. In this way, a probability of incorrect detection can be reduced, and a detection probability can be improved.

It may be understood that, in the foregoing method embodiments, the methods and the operations implemented by the encoder side may alternatively be implemented by a component (for example, a chip or a circuit) used in an encoder side device, and the methods and the operations implemented by the decoder side may alternatively be implemented by a component (for example, a chip or a circuit) used in a decoder side device.

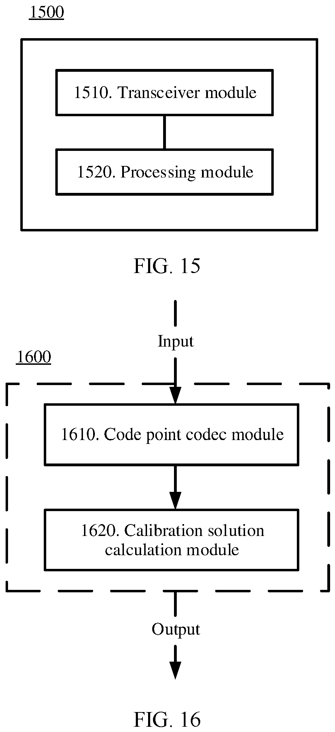

The methods provided in embodiments of this application are described above in detail with reference to FIG. 4 to FIG. 14. Image processing apparatuses provided in embodiments of this application are described below in detail with reference to FIG. 15 to FIG. 16. It should be understood that description of the apparatus embodiments corresponds to the description of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, such as an encoder side device or a decoder side device, includes a corresponding hardware structure and/or software module for implementing each function. A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional module division may be performed on the encoder side device or the decoder side device based on the foregoing method examples. For example, various functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which functional modules are divided based on corresponding functions is used below for description.

FIG. 15 is a schematic block diagram of an image processing apparatus 1500 according to an embodiment of this application. As shown in the figure, the apparatus 1500 may include a transceiver module 1510 and a processing module 1520. The transceiver module 1510 may be configured to collect an image, and the processing module 1520 is configured to perform image processing. Optionally, the apparatus 1500 may be a chip or a chip system. When the apparatus 1500 is a chip or a chip system, the transceiver module may be an input/output interface, an interface circuit, an output circuit, an input circuit, a pin, a related circuit, or the like on the chip or the chip system. The processing module may also be implemented as a processing circuit or a logic circuit.

In a possible design, the apparatus 1500 may perform a step or a procedure performed by the decoder side device in the foregoing method embodiments, for example, may be the decoder side device, or a chip, a chip system, or a circuit disposed in the device. The transceiver module 1510 is configured to perform a collection-related operation of the decoder side device in the foregoing method embodiments, and the processing module 1520 is configured to perform a processing-related operation of the decoder side device in the foregoing method embodiments.

In a possible implementation, the transceiver module 1510 is configured to collect a calibration image, where the calibration image includes a position mark that is used to indicate a position of a positioning point of the calibration image; and the processing module 1520 is configured to decode the calibration image based on the calibration image and the position mark.

Optionally, the position mark is marked by using different colors. For example, the position mark is marked by a positioning point of a black-and-white checkerboard.

Optionally, the processing module 1520 is specifically configured to: determine the positioning point of the calibration image based on the position mark; and decode the calibration image based on the positioning point of the calibration image and the calibration image.

Optionally, the processing module 1520 is specifically configured to: obtain, based on the calibration image and the position mark, a positioning point obtained through rough extraction; and perform sub-pixelization processing on the positioning point obtained through rough extraction, to determine the positioning point of the calibration image.

Optionally, the processing module 1520 is specifically configured to: obtain, based on the calibration image and the position mark, a binary code corresponding to the calibration image; and determine a code direction of the calibration image based on a position of a preset sequence in the binary code.

Optionally, the preset sequence is located on a most significant bit or a least significant bit of a code.

Optionally, the processing module 1520 is specifically configured to: decode the calibration image based on the calibration image and the position mark under M threshold conditions, to obtain M decoding results, where M is an integer greater than or equal to 2; and determine a decoding result that appears most frequently in the M decoding results as a decoding result of the calibration image.

Optionally, a contour of the calibration image is circular.

In still another possible implementation, the transceiver module 1510 is configured to collect a calibration image; the processing module 1520 is configured to obtain a binary code corresponding to the calibration image, and determine a code direction of the calibration image based on a position of a preset sequence in the binary code; and the processing module 1520 is configured to decode the calibration image based on the code direction of the calibration image.

Optionally, the preset sequence is located on a most significant bit or a least significant bit of a code.

The apparatus 1500 may perform steps or procedures performed by the decoder side device in the method 400 according to embodiments of this application. The apparatus 1500 may include units or modules configured to perform the methods performed by the decoder side device in FIG. 4 to FIG. 14. In addition, the modules in the apparatus 1500 and the foregoing other operations and/or functions are used to perform corresponding procedures in FIG. 4 to FIG. 14.

When the apparatus 1500 is configured to implement the method 400 in FIG. 4, the transceiver module 1510 may be configured to perform Step 410 in the method 400, and the processing module 1520 may be configured to perform Step 420 in the method 400.

It should be understood that, a specific process of performing a corresponding step by each module is described in detail in the foregoing method embodiments. For brevity, details are not described herein again.

In another possible design, the apparatus 1500 may perform a step or a procedure performed by the encoder side device in the foregoing method embodiments, for example, may be the encoder side device, or a chip, a chip system, or a circuit disposed in the device. The transceiver module 1510 is configured to perform a collection-related operation of the encoder side device in the foregoing method embodiments, and the processing module 1520 is configured to perform a processing-related operation of the encoder side device in the foregoing method embodiments.

In a possible implementation, the transceiver module 1510 is configured to obtain a code value; and the processing module 1520 is configured to generate a calibration image based on the code value, where the calibration image includes a position mark that is used to indicate a position of a positioning point of the calibration image.

Optionally, the position mark is marked by using different colors. For example, the position mark is marked by a positioning point of a black-and-white checkerboard.

Optionally, the processing module 1520 is specifically configured to generate the calibration image based on a binary code corresponding to the code value, where a position of a preset sequence in the binary code is used to determine a code direction of the calibration image.

Optionally, the preset sequence is located on a most significant bit or a least significant bit of a code.

Optionally, a contour of the calibration image is circular.

Optionally, the calibration image includes N code points, where N is an integer greater than or equal to 1. The processing module 1520 is specifically configured to: arrange the N code points on an inner ring and an outer ring, to generate the calibration image.

In still another possible implementation, the transceiver module 1510 is configured to obtain a code value. The processing module 1520 is configured to generate the calibration image based on a binary code corresponding to the code value, where a position of a preset sequence in the binary code is used to determine a code direction of the calibration image.

Optionally, the preset sequence is located on a most significant bit or a least significant bit of a code.

The apparatus 1500 may perform steps or procedures performed by the encoder side device in the method 400 according to embodiments of this application. The apparatus 1500 may include units or modules configured to perform the methods performed by the encoder side device in FIG. 4 to FIG. 14. In addition, the modules in the apparatus 1500 and the foregoing other operations and/or functions are used to perform corresponding procedures in FIG. 4 to FIG. 14.

When the apparatus 1500 is configured to perform the method 400 in FIG. 4, the processing module 1520 may be configured to perform Step 401 in the method 400.

It should be understood that, a specific process of performing a corresponding step by each module is described in detail in the foregoing method embodiments. For brevity, details are not described herein again.

FIG. 16 is a schematic block diagram of another image processing apparatus 1600 according to an embodiment of this application. The apparatus 1600 may be a system configured to perform calibration, for example, a sensor calibration system, or may be a chip or a computer program product. For example, when the apparatus 1600 is the computer program product, the apparatus 1600 may be a computer program run on an in-vehicle computing platform for self-driving.

FIG. 16 is a schematic diagram of a sensor calibration system. As shown in FIG. 16, the apparatus 1600 may include a code point codec module 1610 and a calibration solution calculation module 1620. The code point codec module 1610 may be configured to perform corresponding processes in FIG. 4 to FIG. 14, for example, perform processing such as decoding on a collected image.

For example, the code point codec module 1610 may store a program, and execute the program stored in the code point codec module 1610, so that the code point codec module 1610 is configured to perform a related processing step in the foregoing method embodiments, for example, a processing process such as decoding an image. The calibration solution calculation module 1620 may store a program, and execute the program stored in the calibration solution calculation module 1620, so that the calibration solution calculation module 1620 is configured to perform a related calculation step in the foregoing method embodiments, for example, a process of calculating an extrinsic camera parameter.

For example, the apparatus 1600 may further include a storage module, and the storage module stores a program. When the program stored in the storage module is executed, the code point codec module 1610 is configured to perform a related processing step in the foregoing method embodiments, for example, a processing process such as decoding an image. When the program stored in the storage module is executed, the calibration solution calculation module 1620 is configured to perform a related calculation step in the foregoing method embodiments, for example, a process of calculating an extrinsic camera parameter.

It should be understood that the foregoing description is merely an example, and this embodiment of this application is not limited thereto.

In a possible implementation, original data such as an image (for example, an image including a code point) or a laser point cloud is input to the code point codec module 1610. In other words, after the code point codec module 1610 collects a to-be-calibrated image, the code point codec module 1610 may be configured to obtain pixel coordinates and world coordinates that are in a one-to-one correspondence based on a calibration scenario parameter. The calibration solution calculation module 1620 may calculate an extrinsic camera parameter of a camera based on a result of the code point codec module 1610.

Optionally, the calibration solution calculation module 1620 may further input a calibration result.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods may be performed by using a hardware integrated logical circuit in the processor or by using instructions in a form of software. The steps in the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that the processor in this embodiment of this application may be an integrated circuit chip, and has a signal processing capability. In an implementation process, steps in the foregoing method embodiments can be performed by using a hardware integrated logical circuit in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that, in embodiments of this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories in the system and methods described in this specification include but are not limited to these memories and any memory of another appropriate type.

According to the methods provided in embodiments of this application, this application further provides a computer program product. The computer program product includes computer program code. When the computer program code is run on a computer, the computer is enabled to perform the method in any one of the embodiments shown in FIG. 4 to FIG. 14.

According to the methods provided in embodiments of this application, this application further provides a computer-readable storage medium. The computer-readable storage medium stores program code. When the program code is run on a computer, the computer is enabled to perform the method in any one of the embodiments shown in FIG. 4 to FIG. 14.

According to the methods provided in embodiments of this application, this application further provides a system including one or more of the following: the foregoing one or more encoding modules, the foregoing one or more decoding modules, and the foregoing one or more solution calculation modules.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disc (solid state disc, SSD)), or the like.

The network device and the terminal device in the foregoing apparatus embodiments correspond to the network device and the terminal device in the method embodiments. A corresponding module or unit performs a corresponding step. For example, a communications unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as an internet interacting with another system by using a signal).

A person of ordinary skill in the art may be aware that, the units and algorithm steps described with reference to the examples in embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional art, or some of the technical solutions may be implemented in a form of a software product. The computer software product is stored in a storage medium, and includes several instructions for indicating a computer device (which may be a personal computer, a server, or a network device) to perform all or some of steps of the methods described in embodiments of this application. The foregoing storage medium includes any medium that can store program code, such as a USB flash drive, a removable hard disk, a ROM, a RAM, a magnetic disk, or an optical disc.

The foregoing description is merely specific implementations of this application, but the protection scope of this application is not limited thereto. Any variation or replacement readily figured out by a person skilled in the art within the technical scope disclosed in this application shall fall within the protection scope of this application.

**Claims**

1. An image processing method, comprising:

   collecting a calibration image, wherein the calibration image comprises a position mark that is used to indicate a position of a positioning point of the calibration image; and
   decoding the calibration image based on the calibration image and the position mark.

2. The method according to claim 1, wherein the decoding the calibration image based on the calibration image and the position mark comprises:

   determining the positioning point of the calibration image based on the position mark; and
   decoding the calibration image based on the positioning point of the calibration image and the calibration image.

3. The method according to claim 1 or 2, wherein the decoding the calibration image based on the calibration image and the position mark comprises:

   obtaining, based on the calibration image and the position mark, a positioning point through rough extraction; and
   performing sub-pixelization processing on the positioning point obtained through rough extraction, to determine the positioning point of the calibration image.

4. The method according to any one of claims 1 to 3, wherein the decoding the calibration image based on the calibration image and the position mark comprises:

   obtaining, based on the calibration image and the position mark, a binary code corresponding to the calibration image; and
   determining a code direction of the calibration image based on a position of a preset sequence in the binary code.

5. The method according to claim 4, wherein
   the preset sequence is located on a most significant bit or a least significant bit of a code.

6. The method according to any one of claims 1 to 5, wherein
   the decoding the calibration image based on the calibration image and the position mark comprises:

   decoding the calibration image based on the calibration image and the position mark under M threshold conditions, to obtain M decoding results, wherein M is an integer greater than or equal to 2; and
   determining a decoding result that appears most frequently in the M decoding results as a decoding result of the calibration image.

7. The method according to any one of claims 1 to 6, wherein
   the position mark is marked by using different colors.

8. The method according to any one of claims 1 to 7, wherein a contour of the calibration image is circular.

9. An image processing method, comprising:

   obtaining a code value; and
   generating a calibration image based on the code value, wherein the calibration image comprises a position mark that is used to indicate a position of a positioning point of the calibration image.

10. The method according to claim 9, wherein the generating a calibration image based on the code value comprises:

    generating the calibration image based on a binary code corresponding to the code value, wherein
    a position of a preset sequence in the binary code is used to determine a code direction of the calibration image.

11. The method according to claim 10, wherein
    the preset sequence is located on a most significant bit or a least significant bit of a code.

12. The method according to any one of claims 9 to 11, wherein the calibration image comprises N code points, and N is an integer greater than or equal to 1; and
the generating a calibration image comprises:
arranging the N code points on an inner ring and an outer ring to generate the calibration image.

13. The method according to any one of claims 9 to 12, wherein
the position mark is marked by using different colors.

14. The method according to any one of claims 9 to 13, wherein a contour of the calibration image is circular.

15. An image processing apparatus, comprising:

a transceiver module, configured to collect a calibration image, wherein the calibration image comprises a position mark that is used to indicate a position of a positioning point of the calibration image; and
a processing module, configured to decode the calibration image based on the calibration image and the position mark.

16. The apparatus according to claim 15, wherein the processing module is specifically configured to:

determine the positioning point of the calibration image based on the position mark; and
decode the calibration image based on the positioning point of the calibration image and the calibration image.

17. The apparatus according to claim 15 or 16, wherein the processing module is specifically configured to:

obtain, based on the calibration image and the position mark, a positioning point through rough extraction; and
perform sub-pixelization processing on the positioning point obtained through rough extraction, to determine the positioning point of the calibration image.

18. The apparatus according to any one of claims 15 to 17, wherein the processing module is specifically configured to:

obtain, based on the calibration image and the position mark, a binary code corresponding to the calibration image; and
determine a code direction of the calibration image based on a position of a preset sequence in the binary code.

19. The apparatus according to claim 18, wherein
the preset sequence is located on a most significant bit or a least significant bit of a code.

20. The apparatus according to any one of claims 15 to 19, wherein the processing module is specifically configured to:

decode the calibration image based on the calibration image and the position mark under M threshold conditions, to obtain M decoding results, wherein M is an integer greater than or equal to 2; and
determine a decoding result that appears most frequently in the M decoding results as a decoding result of the calibration image.

21. The apparatus according to any one of claims 15 to 20, wherein
the position mark is marked by using different colors.

22. The apparatus according to any one of claims 15 to 21, wherein a contour of the calibration image is circular.

23. An image processing apparatus, comprising:

a transceiver module, configured to obtain a code value; and
a processing module, configured to generate a calibration image based on the code value, wherein the calibration image comprises a position mark that is used to indicate a position of a positioning point of the calibration image.

24. The apparatus according to claim 23, wherein the processing module is specifically configured to:

generate the calibration image based on a binary code corresponding to the code value, wherein

a position of a preset sequence in the binary code is used to determine a code direction of the calibration image.

25. The apparatus according to claim 24, wherein
the preset sequence is located on a most significant bit or a least significant bit of a code.

26. The apparatus according to any one of claims 23 to 25, wherein the calibration image comprises N code points, and N is an integer greater than or equal to 1; and
the processing module is specifically configured to:
arrange the N code points on an inner ring and an outer ring to generate the calibration image.

27. The apparatus according to any one of claims 23 to 26, wherein
the position mark is marked by using different colors.

28. The apparatus according to any one of claims 23 to 27, wherein a contour of the calibration image is circular.

29. An image processing apparatus, comprising at least one processor, wherein the at least one processor is configured to perform the method according to any one of claims 1 to 14.

30. An image processing apparatus, comprising at least one processor, wherein the at least one processor is configured to execute a computer program stored in a memory, to enable the apparatus to implement the method according to any one of claims 1 to 14.

31. An image processing apparatus, comprising:

a communications interface, configured to input and/or output information; and
a processor, configured to execute a computer program, to enable the apparatus to implement the method according to any one of claims 1 to 14.

32. An image processing apparatus, comprising:

a memory, configured to store computer instructions; and
a processor, configured to execute computer instructions stored in a memory, to enable the apparatus to implement the method according to any one of claims 1 to 14.

33. A chip, comprising a processor and an interface, and configured to invoke, from a memory, a computer program stored in the memory, and run the computer program, to implement the method according to any one of claims 1 to 14.

34. A computer-readable storage medium, wherein the computer-readable storage medium stores a computer program; and when the computer program is executed by an apparatus, the apparatus is enabled to perform the method according to any one of claims 1 to 14.

35. A computer program product, wherein the computer program product comprises instructions, and when the instructions are executed by a computer, an apparatus is enabled to perform the method according to any one of claims 1 to 14.

FIG. 1

Camera

Calibration board

Four-wheel positioning apparatus

Coordinate system of a vehicle body

FIG. 2

FIG. 3

400

```
┌ ─ ─ ─ ─ ─ ─ ─ ─ ─ ─ ─ ─ ─ ─ ─ ─ ─ ─ ─ ─ ─ ┐
│          Generate a calibration image          │ ⟋ 401
└ ─ ─ ─ ─ ─ ─ ─ ─ ─ ─ ─ ─ ─ ─ ─ ─ ─ ─ ─ ─ ─ ┘
```

```
┌─────────────────────────────────────────────┐
│   Collect the calibration image, where the calibration image   │  ⟋ 410
│ includes a position mark, and the position mark is used to indicate │
│    a position of a positioning point of the calibration image    │
└─────────────────────────────────────────────┘
```

```
┌─────────────────────────────────────────────┐
│ Decode the calibration image based on the calibration image and │  ⟋ 420
│                   the position mark                   │
└─────────────────────────────────────────────┘
```

FIG. 4

FIG. 5

FIG. 6

FIG. 7

End bit

Start bit

FIG. 8

EP 4 095 803 A1

End bit

Start bit

Bit (bit)  bit 15 bit 14 bit 13 bit 12 bit 11 bit 10 bit 9 bit 8  bit 7 bit 6 bit 5 bit 4 bit 3 bit 2  bit 1 bit 0

Input

| 1 | 0 | 0 | 1 | 0 | 1 | 1 | 0 | 1 | 1 | 0 | 1 | 1 | 0 | 0 | 0 |

Right circular shift by three bits

Output

| 0 | 0 | 0 | 1 | 0 | 0 | 1 | 0 | 1 | 1 | 0 | 1 | 1 | 0 | 1 | 1 | 0 | 0 | 0 |

Three moved digits are
shifted to the beginning

FIG. 9

Original image → Standard circle → Rough positioning → Precise positioning

FIG. 10

Start

Image preprocessing

Perform contour filtering according to a preset condition

Yes → Perform ellipse fitting and affine transformation to transform a contour obtained through filtering into a standard circle

Perform rough positioning point extraction

No

Whether a next contour exists

Decode a calibration image and output a code result and a position at a current scale

Perform precise positioning point extraction

A final result is obtained by voting on code results and positions at all scales

End

FIG. 11

Original
image
(1)

Standard
circle
(2)

Rough
positioning
(3)

Precise
positioning
(4)

Decoding
(5)

Voting result
(6)

FIG. 12

Start

Standard circle image

Remove an irrelevant area and reserve code points

Extract a valid code contour

Calculate an included angle between a center of each valid code contour and a center of a standard circle, and perform ranking

Determine, based on a designed angular resolution, whether a code point exists on each code bit

Generate a binary code and output a decoding result

End

FIG. 13

Camera calibration starts

Load a calibration scenario parameter

Collect a calibration image and a wheel image

**Decode positions and IDs of all code points in the image**

1410

Whether a plurality of valid code points are identified — No

Yes

Perform matching on the code points, and obtain pixel coordinates and spatial coordinates that are in a one-to-one correspondence

Calculate a pose of a camera relative to a world coordinate system

1420

Calculate a pose of a vehicle body relative to the world coordinate system

Determine an extrinsic camera parameter based on the pose of the camera relative to the world coordinate system and the pose of the vehicle body relative to the world coordinate system

Camera calibration ends

FIG. 14

1500

┌─────────────────────────────────────┐
│  ┌───────────────────────────────┐  │
│  │   1510. Transceiver module    │  │
│  └───────────────────────────────┘  │
│                 │                    │
│  ┌───────────────────────────────┐  │
│  │   1520. Processing module     │  │
│  └───────────────────────────────┘  │
└─────────────────────────────────────┘

FIG. 15

Input

1600

┌ ─ ─ ─ ─ ─ ─ ─ ─ ─ ─ ─ ─ ─ ─ ─ ─ ┐
│  ┌───────────────────────────────┐  │
│  │  1610. Code point codec module │  │
│  └───────────────────────────────┘  │
│                 ↓                    │
│  ┌───────────────────────────────┐  │
│  │   1620. Calibration solution   │  │
│  │      calculation module        │  │
│  └───────────────────────────────┘  │
└ ─ ─ ─ ─ ─ ─ ─ ─ ─ ─ ─ ─ ─ ─ ─ ─ ┘

Output

FIG. 16

## INTERNATIONAL SEARCH REPORT

| International application No. |
| --- |
| **PCT/CN2021/070399** |

**A. CLASSIFICATION OF SUBJECT MATTER**

G06T 7/80(2017.01)i; G06T 7/60(2017.01)i; G06T 9/00(2006.01)i; H04N 19/44(2014.01)i

According to International Patent Classification (IPC) or to both national classification and IPC

**B. FIELDS SEARCHED**

Minimum documentation searched (classification system followed by classification symbols)

G06T; H04N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 图像, 标定, 位置, 标记, 点, 编码, 解码, 二进制, 序列, 阈值, 颜色, image, calibration, position, mark, point, encode, decode, binary, code, sequence, threshold, color

**C. DOCUMENTS CONSIDERED TO BE RELEVANT**

| Category* | Citation of document, with indication, where appropriate, of the relevant passages | Relevant to claim No. |
| --- | --- | --- |
| X | CN 106546230 A (FEITE TECHNOLOGY (BEIJING) CO., LTD.) 29 March 2017 (2017-03-29) description, paragraphs [0102]-[0227] | 1-35 |
| A | CN 101673399 A (ZHEJIANG UNIVERSITY OF TECHNOLOGY) 17 March 2010 (2010-03-17) entire document | 1-35 |
| A | CN 108717709 A (NORTHEASTERN UNIVERSITY) 30 October 2018 (2018-10-30) entire document | 1-35 |
| A | US 2014097250 A1 (ANTOGNINI, Thomas Charles et al.) 10 April 2014 (2014-04-10) entire document | 1-35 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2021** | **30 March 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/070399**

| Patent document cited in search report | | | Publication date (day/month/year) | Patent family member(s) | Publication date (day/month/year) |
|---|---|---|---|---|---|
| CN | 106546230 | A | 29 March 2017 | None | |
| CN | 101673399 | A | 17 March 2010 | None | |
| CN | 108717709 | A | 30 October 2018 | None | |
| US | 2014097250 | A1 | 10 April 2014 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010076152